# EUROPEAN PATENT APPLICATION

(11) **EP 1 924 090 A1**
(43) Date of publication of application: **21.05.2008**
(21) Application number: 06797695.1
(22) Date of filing: 08.09.2006
(51) Int. Cl.: H04N 5/74, G03B 21/00, H04M 1/00

(54) **PROJECTOR-EQUIPPED ELECTRONIC EQUIPMENT**

(30) Priority: 09.09.2005 JP 2005262217; 09.09.2005 JP 2005262218; 09.09.2005 JP 2005262219
(71) Applicant: NIKON CORPORATION, Tokyo 100-8331 (JP)
(72) Inventor: FUJINAWA, Nobuhiro, Tokyo 100-8331 (JP); NOZAKI, Hirotake, Tokyo 100-8331 (JP); MITSUHASHI, Setsu, Tokyo 100-8331 (JP); OHMURA, Akira, Tokyo 100-8331 (JP)
(74) Representative: Walaski, Jan Filip
(86) International application number: PCT/JP2006/317841
(87) International publication number: WO 2007/029805

(57) **Abstract**

A projector-attached electronic equipment includes: a projection device that projects an optical image; a judging device that judges whether to perform projection by the projection device according to a state of the electronic equipment; and a projection control device. The projection control device, (1) when it is judged by the judging device that projection is possible, controls the projection device to start projection in response to an instruction for projection from a projectioninstruction member while controls the projection device to terminate projection in response to an instruction for terminating projection, and (2) when it is judged by the judging device that projection is impossible, if projection is being performed, controls the projection device to terminate the projection being performed while, if no projection is being performed, controls the projection device to prohibit start of the projection.

## Description

### TECHNICAL FIELD

The present invention relates to projector-attached electronic equipment that projects an optical image.

### BACKGROUND ART

Electronic equipment that includes small size electronic equipment such as a mobile phone having a projection function is known (see Patent Document 1). With the projector-attached mobile phone disclosed in the Patent Document 1, a calling party can have information projected on a palm of his or her own or on a wall while he or she is calling.

Patent Document 1: Japanese Laid-Open Patent
Application No. 2000-236375

### DISCLOSURE OF THE INVENTION

### Problems to be Solved by the Invention

Projection by the projector may sometimes be inconvenient even when an instruction for projection is made.

### Means for Solving the Problems

A projector-attached electronic equipment according to a 1st aspect of the present invention includes: a projection device that projects an optical image; a judging device that judges whether to perform projection by the projection device according to a state of the electronic equipment; and a projection control device that, (1) when it is judged by the judging device that projection is possible, controls the projection device to start projection in response to an instruction for projection from a projection instruction member while controls the projection device to terminate projection in response to an instruction for terminating projection, and (2) when it is judged by the judging device that projection is impossible, if projection is being performed, controls the projection device to terminate the projection being performed while, if no projection is being performed, controls the projection device to prohibit start of the projection.
It is preferable that the projector-attached electronic equipment according to the 1st aspect further includes a protection member that is configured to be opened and closed and to protect an exposed portion of the projection device in a closed state, and that the judging device, if the protection member is brought in an open state, judges that the projection is possible while if the protection member is brought in a closed state, judges that the projection is impossible.
The projector-attached electronic equipment according to the 1st aspect may further include a timing device that measures a continuous projection time by the projection device, and the judging device may judge that the projection is possible before the continuous projection time measured by the timing device reaches a predetermined time while the judging device, when the continuous projection time measured by the timing means reaches the predetermined time, judges that the projection is impossible.
The projector-attached electronic equipment according to the 1st aspect may further include a voltage detection device that detects a voltage of a battery that drives the electronic equipment, and the judging device may, when the voltage detection device detects a voltage equal to or higher than a predetermined value, judge that the projection is possible while, when the voltage detection device detects a voltage lower than the predetermined value, judge that the projection is impossible.
The projector-attached electronic equipment according to the 1st aspect may further include a folding mechanism that folds the electronic equipment, and the judging device may judge whether or not the projection is possible depending on a folding angle of the folding mechanism.
A projector-attached electronic equipment according to a 2nd aspect of the present invention includes: a projection device that projects an optical image; a control device that controls projection by the projection device depending on a time elapsed from an instruction for projection from a projection instruction member.
In the projector-attached electronic equipment according to the 2nd aspect, it is preferable that the control device controls the projection device to perform the projection for a predetermined time from the instruction for projection. The control device may control the projection device to start the projection with a delay of a predetermined time from the instruction for projection. It is preferable for the control device to control the projection device to gradually increase projection luminance to a predetermined luminance in response to the instruction for projection.
A projector-attached electronic equipment according to a 3rd aspect of the present invention include: a projection device that projects an optical image; a display device that displays information; and a control device that, in response to an instruction for projection from a projection instruction member, controls the projection device to start projection and controls the display device to terminate display thereon, wherein the control device, in response to an instruction for projection of a menu screen, controls the projection device to project the menu screen and controls the display device to display the menu screen thereon.
In the projector-attached electronic equipment according to the 3rd aspect, it is preferable that the menu screen includes at least one adjustment item for the projection device among luminance, color, trapezoid, and focus, that the projector-attached electronic equipment further includes an operation member that is operated to select the adjustment item displayed on the menu screen, and that the control device, in response to an operation signal from the operation member, instructs the projection device to perform adjustment on the selected adjustment item.
A projector-attached mobile phone according to a 4th aspect of the present invention includes: a projection device that projects an optical image; a communication device that performs communication with an external device; and a projection control device that controls the projection device to terminate the projection when a signal instructing start of communication is input to the communication device during projection by the projection device.
In the projector-attached mobile phone according to the 4th aspect of the present invention, it is preferable that he projection control device, when a signal instructing termination of communication is input to the communication device, controls the projection device to restart the projection.
A projector-attached mobile phone according to a 5th aspect of the present invention includes: a projection device that projects an optical image; a communication device that performs communication with an external device; and a projection control device that, when there is an incoming communication from the external device to the communication device, controls the projection device to start projection indicating an incoming notification.
In the projector-attached mobile phone according to the 5th aspect, it is preferable that the projection control device controls the projection device to terminate the projection indicating the incoming notification after a predetermined time from a start of the projection. The projection control device may, when the projection device is performing the projection, control the projection device to project information indicating the incoming notification in superposition on a projection image. It is preferable that, when the mobile phone is set in a silent mode, the projection control device controls the projection device to prohibit the projection indicating the incoming notification.
A projector-attached camera according to a 6th aspect of the present invention includes: a projection device that projects an optical image; a photographing device that performs photographing; an operation member that is operated to switch between projection by the projection device and photographing by the photographing device; and a projection control device that, when a signal for instructing switching to photographing by the photographing device is input by the operation member during the projection by the projection device, controls the projection device to terminate the projection.

### Advantageous Effect of the Invention

According to the present invention, projector-attached electronic equipment that appropriately judges/controls whether or not to perform projection can be provided.

### BRIEF DESCRIPTION OF THE DRAWINGS

FIGS. 1(a), 1(b), and 1(c) are outline views showing a projector-attached mobile phone according to an embodiment of the present invention, FIG. 1(a) being a front view, FIG. 1(b) being a side view, and FIG. 1(c) being a rear view;
FIG. 2 is a block diagram illustrating circuitry of the projector-attached mobile phone shown in FIGS. 1 (a) to 1(c);
FIG. 3 is a perspective view illustrating a cradle and the projector-attached mobile phone;
FIG. 4 is a block diagram illustrating circuitry of the cradle;
FIG. 5 is a flowchart illustrating the flow of projector processing performed by a CPU of the projector-attached mobile phone;
FIG. 6 is a flowchart subsequent to FIG. 5, illustrating the projector processing performed by the CPU of the projector-attached mobile phone;
FIG. 7 is a flowchart illustrating the main processing performed by a CPU of the cradle;
FIG. 8 is a diagram presenting an example of a projector adjustment menu in a menu screen;
FIG. 9 is a diagram presenting an example of an incoming call setting menu in a menu screen;
FIG. 10 is a flowchart illustrating the flow of incoming call processing performed by the CPU of the projector-attached mobile phone; and
FIG. 11 is an outline view showing a projector-attached camera according to an embodiment of the present invention.

### BEST MODE FOR CARRYING OUT THE INVENTION

Hereinafter, the best mode for carrying out the present invention will be explained with reference to the attached drawings. A projection system according to an embodiment of the present invention includes a projector-attached mobile phone and a cradle. When the projector-attached mobile phone is mounted on the cradle, the cradle and the projector-attached mobile phone are connected to each other through an interface to allow communication and power supply therebetween. The interface includes at least a control signal line (Control I/F), a data signal line (Data I/F), and a power source line.

### <<Projector-attached mobile phone>>

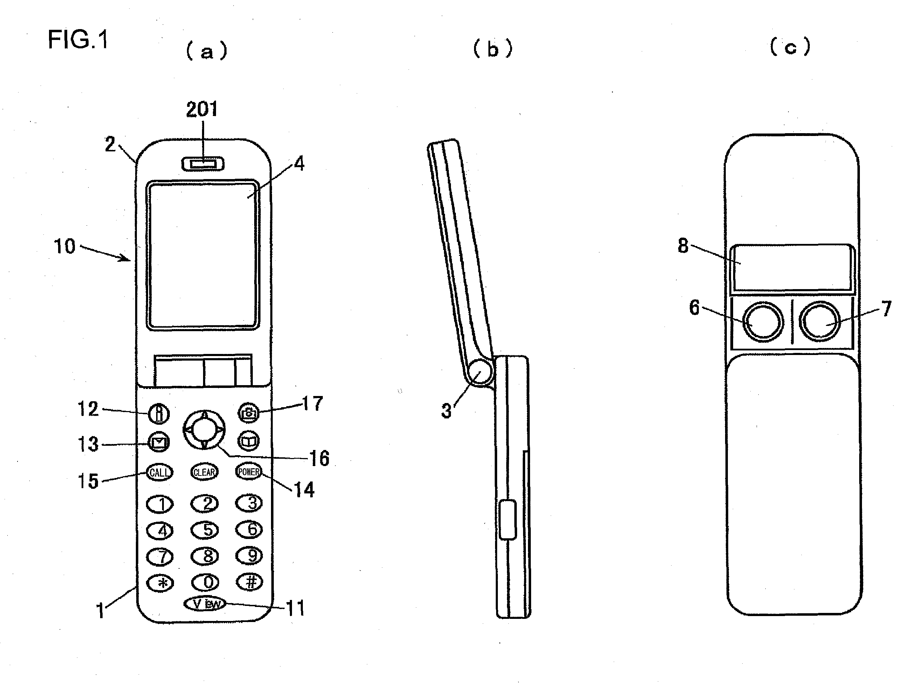

FIGS. 1(a) to 1(c) are outline diagrams illustrating a projector-attached mobile phone 10 according to an embodiment of the present invention. FIG. 1(a) is a front view, FIG. 1(b) is a side view, and FIG. 1(c) is a rear view. In FIGS. 1(a) to 1(c), a casing of the projector-attached mobile phone 10 includes an operation section 1 and a display section 2. The operation section 1 and the display section 2 are supported by a hinge section 3 that is rotatable. That is, the projector-attachedmobile phone 10 is configured to be capable of being folded back with the hinge section 3 that serves as a center of rotation. The hinge section 3 is provided with a click mechanism (not shown). The click mechanism operates in positions at relative angles (folding angles) θ between the operation section 1 and the display section 2 of, for example, 0 degrees, 80 degrees, 90 degrees, and 150 degrees, respectively. The folded state corresponds to θ = 0 degrees. Note that the hinge section 3 may be configured to be capable of being held at any angles besides the above-mentioned click positions.

In the operation section 1 are arranged operation keys that accept operational inputs by the user. The operation keys include a main switch 14 and in addition operation keys that are similar to those provided in a conventional mobile phone with a camera function, a mail transmitting/receiving function, a connecting function to connect to the Internet and so on. For example, an operation key 15 for instructing start and end of calling, an operation key for inputting phone numbers and letters, a cursor key for operating a screen (cross-shape key) 16, an operation key 17 for switching over various action modes such as a camera photographing mode, a projection mode, a mail transmitting/receiving mode, a connection mode to access to the Internet and so on.

The operation section 1 is further provided with an operation key 11 for switching to an action mode (projector mode) in which an optical image is projected using a projector module 6 detailed later as well as the above-mentioned operation keys. When the projection operation key 11 is pressed, the mode of the projector-attached mobile phone is switched into a projector mode to project the optical image by the projector module 6 toward a screen or a wall surface.

The display section 2 has arranged a liquid crystal display 4 on the front side and the projector module 6 and a camera module 7 on the rear side thereof. On the rear side is further provided a slide lens cover 8. FIG. 1(c) shows the lens cover 8 in its open state. When the lens cover 8 slides downward in FIG. 1(c), the lens cover 8 closes so as to cover both lenses in the projector module 6 and the camera module 7. That is, the lens cover 8 is configured to cover and protect respective portions of the projector module 6 and the camera module 7 exposed to the outside in its closed state.

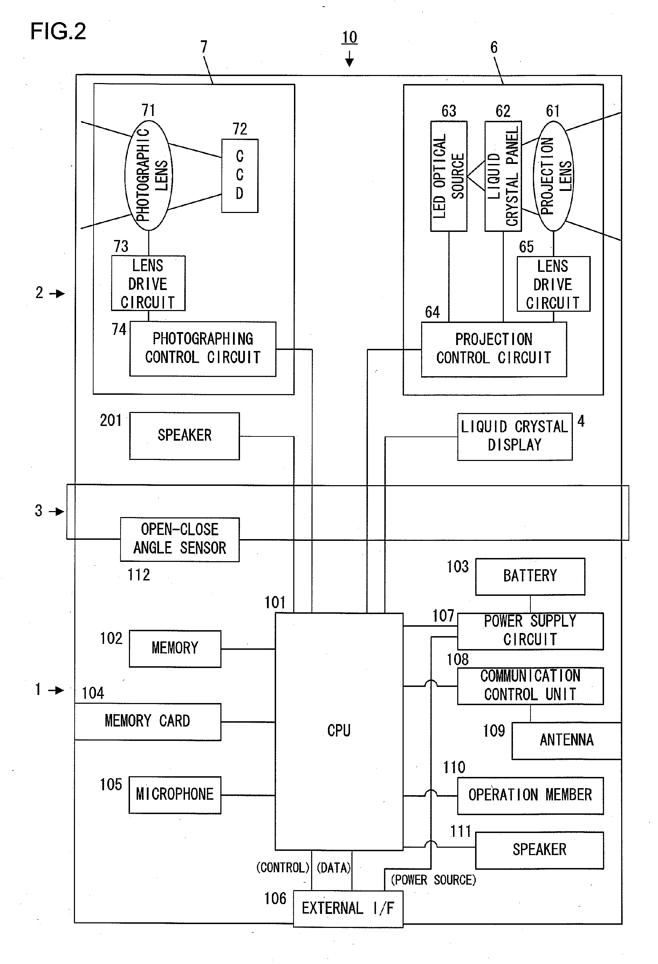

FIG. 2 is a block diagram illustrating circuitry of the projector-attached mobile phone shown in FIGS. 1(a) to 1(c). In FIG. 2, the projector-attached mobile phone includes on the part of the operation section 1, a central processing unit (CPU) 101, a memory 102, a microphone 105, an external interface (I/F) 106, a power supply circuit 107, a communication control unit 108, an antenna 109, an operation member 110, a loudspeaker 111, and an open-close angle sensor 112. A battery 103 and a memory card 104 are each attached to the operation section 1.

On the display section 2 side are provided the liquid crystal display 4, the projector module 6, the camera module 7, and a loudspeaker 201. The projector module 6 and the camera module 7 are arranged such that an aperture of the projection optical system and an aperture of the photographic optical system are arranged on the same plane as shown in FIG. 1(c) and optical axes of both the optical systems are parallel to each other.

The CPU 101 performs, for example, predetermined calculations using signals input from each section that constitutes the projector-attached mobile phone 10 based on a control program and sends control signals to each section of the projector-attached mobile phone 10 to control a phone action, a camera action, and a projector action, respectively. Note that the control program is stored in a nonvolatile memory (not shown) in the CPU 101. The CPU 101 further performs trapezoid distortion correction, i.e., so-called Keystone compensation, on data of the image to be projected by the projector module 6.

The memory 102 is used as a working area of the CPU 101. The memory card 104, which is constituted by a nonvolatile memory, is capable of writing, storing and reading out data such as, for example, image data output from the camera module 7 and image/sound data input from outside through the external interface 106 based on an instruction from the CPU 101.

The microphone 105 converts collected sound into electric signals and then send them to the CPU 101. The sound signals are stored in the memory card 104 upon recording or sent to the communication control unit 108 upon calling. The external interface (I/F) 106 transmits/receives data to/from the cradle detailed hereinbelow or external equipment connected to the cradle according to an instruction from the CPU 101. The data to be transmitted/received include image/sound data and control signals to the projector-attached mobile phone 10. The external interface (I/F) 106 also includes a power supply line.

Note that the external interface (I/F) 106 is controlled by the CPU 101 to interrupt transmitting/receiving data while the projector module 6 is performing projection and to restart the transmitting/receiving data when the projection by the projector module 6 ends.

The loudspeaker 111 reproduces sound according to the sound signals output from the CPU 101. The operation member 110 includes the above-mentioned operation keys 11 to 17 and so on and sends operation signals corresponding to the respective operation keys to the CPU 101.

The communication control unit 108 includes a radio wave transmitting/receiving circuit and performs communication with another phone or the like through a base station (not shown) according to an instruction from the CPU 101. The communication control unit 108 is configured to transmit/receive text data such as a mail, data of an image captured by the camera module 7, data of an image to be projected by the projector module 6 as well as telephone voice. The antenna 109 is a transmitting/receiving antenna for the communication control unit 108.

The battery 103 includes a rechargeable secondary battery and supplies power to each section in the projector-attached mobile phone 10. The power supply circuit 107 includes a DC/DC conversion circuit, a charging circuit, and a voltage detection circuit and converts the voltage of the battery 103 to a voltage required for each section in the projector-attached mobile phone 10. Further, the power supply circuit 107 charges the battery 103 with charge current supplied through the external interface (I/F) 106 when the voltage of the battery 103 is low and the remaining capacity has been decreased.

Note that the power supply circuit 107 is controlled by the CPU 101 so as to interrupt charging of the battery 103 while the projector module 6 is performing projection and to restart the charging when the projection by the projector module 6 is completed.

The open-close angle sensor 112 detects a rotation angle of the hinge section 3, that is, a folding angle θ of the projector-attached mobile phone 10 and sends a detection signal to the CPU 101. The liquid crystal display 4 displays information such as an image or a text according to an instruction from the CPU 101. The loudspeaker 201reproduces sound according to a sound signal output from the CPU 101 while calling.

### (Camera module)

The camera module 7 includes a photographic lens (photographic optical system) 71, an image sensor 72, a lens drive circuit 73, and a photographing control circuit 74. Examples of the image sensor 72 that can be used include a charge coupled device (CCD) and a complementary metal-oxide semiconductor(CMOS) image sensor. The photographing control circuit 74 drives and controls the image sensor 72 and the lens drive circuit 73, respectively, and performs predetermined image processing to imaging signal (stored charge signal) output from the image sensor 72. Examples of the image processing include white balance processing and gamma processing.

The photographic lens 71 is a photographic optical system including, for example, a focus lens and a zoom lens and forms an image of a subject on an imaging plane of the image sensor 72. The photographing control circuit 74 controls the image sensor 72 to start imaging in response to an instruction to start photographing, reads out stored charge signals from the image sensor 72 after completion of the imaging, performs the above-mentioned image processing to the signals, and sends the processed signals as image data to the CPU 101 or the communication control unit 108.

The lens drive circuit 73 moves the focus lens (not shown) that constitutes the photographic lens 71 back and forth in a direction of its optical axis based on a focus adjustment signal output from the photographing control circuit 74. Also, the lens drive circuit 73 moves the zoom lens (not shown) that constitutes the photographic lens 71 back and forth in a direction of optical axis (to telephoto side or wide side) based on a zoom adjustment signal output from the photographing control circuit 74. A focus adjustment amount and a zoom adjustment amount are instructed from the CPU 101 to the photographing control circuit 74.

### (Focus adjustment of camera)

The camera module 7 performs focus adjustment of the photographic lens 71 by shifting the focus lens that constitutes the photographic lens 71 in the direction of the optical axis. When autofocusing adjustment is performed, the CPU 101 sends the focus adjustment signal to the photographing control circuit 74 to maximize an integrated value of a high frequency component (so-called focus evaluation value) concerning the image signal corresponding to a focus detection area (for example, center of photographing screen) out of signals of an image taken by the image sensor 72. The position of the focus lens at which the focus evaluation value is maximal is a focusing position at which the image of a subject taken by the image sensor 72 has no blur on the edge and the contrast of the image is maximal.

### (Zoom adjustment of camera)

The camera module 7 performs optical zoom adjustment of the photographic lens 71 by shifting the zoom lens that constitutes the photographic lens 71 in the direction of the optical axis. The CPU 101 sends a zoom adjustment signal to the photographing control circuit 74 in response to a zoom operation signal from the operation member 110.

### (Projector module)

The projector module 6 includes a projection lens (projection optical system) 61, a liquid crystal panel 62, an LED optical source 63, a projection control circuit 64, and a lens drive circuit 65. The projection control circuit 64 supplies drive current to the LED optical source 63 in response to an instruction for projection output from the CPU 101. The LED optical source 63 illuminates the liquid crystal panel 62 at brightness according to the supplied current.

The projection control circuit 64 further creates a liquid crystal panel drive signal according to the image data sent from the CPU 101 and drives the liquid crystal panel 62 in response to the created drive signal. In concrete terms, a voltage corresponding to the image signal is applied to the liquid crystal layer pixel by pixel. The liquid crystal layer to which the voltage has been applied changes the orientation of liquid crystal molecules therein to vary optical transmittivity of the liquid crystal layer. By modulating light from the LED optical source 63 corresponding to the image signal, the liquid crystal panel 62 creates an optical image.

The projection lens 61 is a projection optical system including, for example, a focus lens and a zoom lens and projects an optical image emitted from the liquid crystal panel 62. The lens drive circuit 65 drives the projection lens 61 back and forth in a direction perpendicular to the optical axis based on an offset adjustment signal output from the projection control circuit 64. Also, the lens drive circuit 65 drives the focus lens (not shown) that constitutes the projection lens 61 back and forth in a direction of the optical axis based on the focus adjustment signal output from the projection control circuit 64. Further, the lens drive circuit 65 drives the zoom lens (not shown) that constitutes the projection lens 61 back and forth in a direction of the optical axis based on a zoom adjustment signal output from the projection control circuit 64. An offset adjustment amount, a focus adjustment amount, and a zoom adjustment amount are instructed from the CPU 101 to the projection control circuit 64.

The projector module 6 is controlled by the CPU 101 so as to interrupt projection if a calling operation is performed during projection and restart the projection if the calling is over. Further, the projector module 6 is controlled by the CPU 101 so as to terminate the projection if the photographing is to be performed by the camera module 7.

### (Offset of projection image)

Shifting the projection lens 61 in the direction perpendicular to the optical axis leads to a change in an emission direction in which the light beam is emitted from the projector module 6 to offset the projection image. The offset of the projection image may be achieved by shifting the liquid crystal panel 62 or the LED optical source 63 in the direction perpendicular to the optical axis apart from by shifting the projection lens 61. That is, varying the relative positional relationship between the projection lens 61 and the liquid crystal panel 62 in the direction perpendicular to the optical axis enables the offset of the projection image to be realized.

### (Keystone compensation of projection image)

When any of the projection lens 61, the liquid crystal panel 62, and the LED optical source 63 is shifted in a direction perpendicular to the optical axis, Keystone compensation is performed on data to be projected corresponding to a shift amount relative to the shifting. Since giving only the above-mentioned offset to the projection image causes the projection image to be changed into a trapezoidal form, the CPU 101 applies electrical Keystone compensation by image processing to correct the projection image from the trapezoidal form to a rectangular form. The memory in the CPU 101 stores in advance initial correction values for correcting the projection image into a rectangular form. The CPU 101 reads out the initial correction value corresponding to an offset adjustment amount, and applies Keystone compensation processing to data of the projection image on the memory 102 based on the read out initial correction values. Then, the CPU 101 sends the image data having undergone the Keystone compensation processing to the projection control circuit 64.

### (Focus adjustment of projection image)

By shifting the focus lens that constitutes the projection lens 61 in a direction of the optical axis, the projector module 6 performs focus adjustment of the projection image. The CPU 101 sends a focus adjustment signal to the projection control circuit 64 in response to an operation signal from the operation member 110.

### (Zoom adjustment of projection image)

By shifting the zoom lens that constitutes the projection lens 61 in a direction of the optical axis, the projector module 6 performs focus adjustment of the projection image. The CPU 101 sends a zoom adjustment signal to the projection control circuit 64 in response to an operation signal from the operation member 110.

### (Projection source: source)

The projector module 6 projects and reproduces a content according to any one of the following (source 1) to (source 3) according to an instruction from the CPU 101. The CPU 101 sends image data corresponding to each image to the projector module 6 so that projection images of (source 1) to (source 3) can be cyclically switched over in the order of (source 1) → (source 2) → (source 3) → (source 1) ... each time when a source switch-over operation signal is input. However, if the memory card 104 is not attached to the projector-attached mobile phone, the (source 1) is skipped. On the other hand, if no external equipment is connected to the external interface (I/F) 106, the (source 3) is skipped.

(Source 1) Reproduction image according to data read out from the memory card 104;
(Source 2) Reproduction image according to data received by the communication control unit 108; and
(Source 3) Reproduction image according to data input through the external interface (I/F) 106.

When an image corresponding to the above-mentioned (source 1) is to be projected, the CPU 101 sequentially reads out from the memory card 104 image data with the newest recording date, that is, image data of the image taken latest among the stored image data and sends the read out image data to the projector module 6. Further, when text data (for example, address information, mail information and so on) are selected as the data of the above-mentioned content, the CPU 101 sends data for projecting a text screen to the projector module 6.

### <<Cradle>>

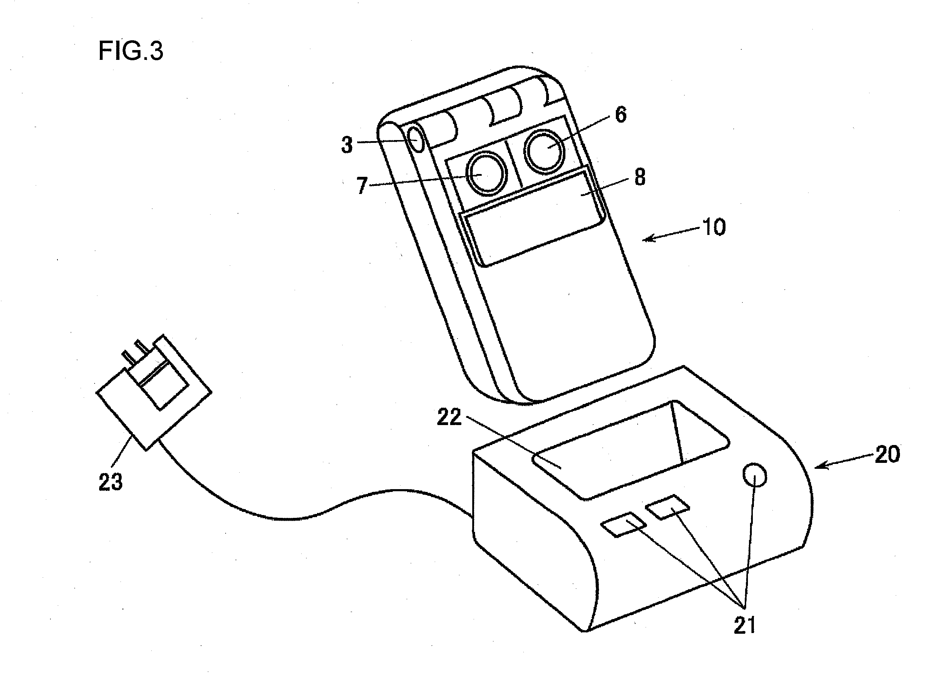

FIG. 3 is a perspective view illustrating the cradle 20 and the projector-attached mobile phone 10. In FIG. 3, the projector-attached mobile phone 10 is mounted on an equipment mounting unit 22 of the cradle 20 in a folded state. The equipment mounting unit 22 is configured to support the projector-attached mobile phone 10 in a mounted state with the projector-attached mobile phone 10 tilting at about 10 degrees from the vertical direction but not to block the aperture of the projection optical system of the projector module 6 and the aperture of the photographic optical system of the camera module 7. With this configuration, the projection optical axis of the projector module 6 is directed by 10 degrees upward with respect to the horizontal direction. In addition, there occurs no eclipse of projection beam from the projector module 6.

The projector-attached mobile phone 10 with the lens cover 8 being in an open state is configured such that the projector module 6 and the camera module 7 can perform projection and photographing, respectively, with the projector module 6 and the camera module 7 mounted on the cradle 20.

The cradle 20 is provided with an operation member 21. The operation member 21 includes, for example, a main switch, an optical source ON/OFF switch, a projection source switch-over switch, and a cursor key for operating the screen, and is configured to operate the projector-attached mobile phone 10 from the cradle 20.

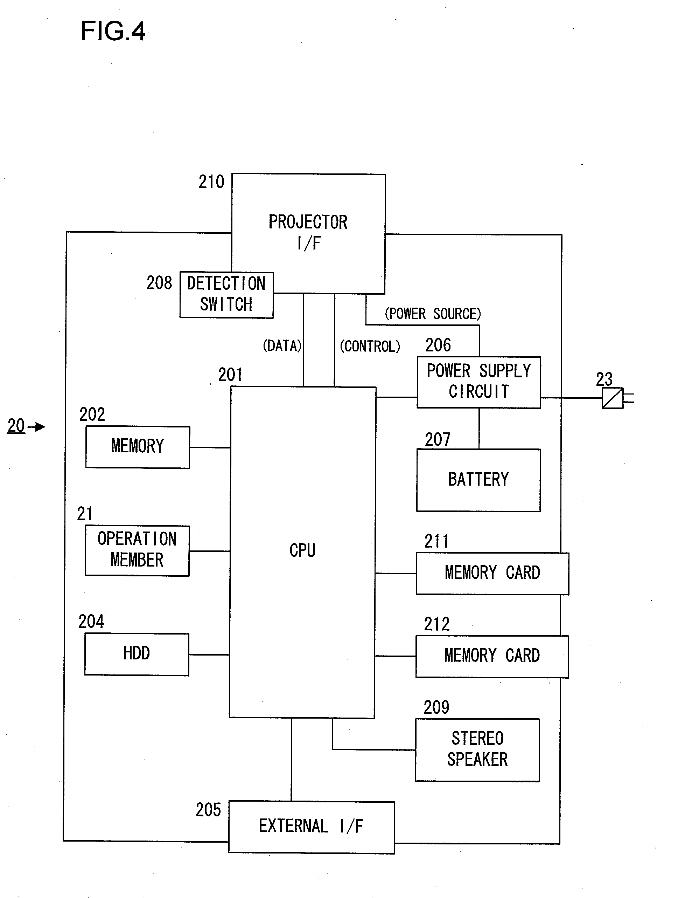

FIG. 4 is a block diagram illustrating the circuitry of the cradle 20. In FIG. 4, the cradle 20 includes a CPU 201, a memory 202, the operation member 21, a hard disk drive (HDD) 204, a power supply circuit 206, a detection switch 208, a projector interface (I/F) 210, a stereo speaker system 209, and an external interface (I/F) 205. On the other hand, a battery 207 and memory cards 211 and 212 are attached to the cradle 20.

The CPU 201, which is a controller, performs, for example, a predetermined calculation that uses signals input from each section constituting the cradle 20 based on a control program and sends a control signal to each section of the cradle 20 to control the operation of the cradle 20. Note that the control program is stored in a nonvolatile memory (not shown) in the CPU 201.

The memory 202 is used as a working memory for the CPU 201. The operation member 21 sends operation signals that correspond to each of the above-mentioned operation switches to the CPU 201.

The memory cards 211 and 212 are recording media of different types, each of which is constituted by a nonvolatile memory. Data such as image data/sound data are written in, are stored into and are read out from the memory cards 211 and 212 independently according to respective instructions from the CPU 201.

The hard disk drive (HDD) 204 is a storage device having a relatively large volume as compared with a memory card. The hard disk drive (HDD) 204 is capable of writing, storing, and reading out data such as image/sound data according to instructions form the CPU 201. The hard disk drive (HDD) 204 is configured to copy and store the data of image projected by the projector-attached mobile phone 10 or store history information of the data of the image projected by the projector -attached mobile phone 10.

The external interface (I/F) 205 transmits/receives data to/from the projector and an external equipment such as a personal computer (PC) according to an instruction from the CPU 201. The data to be transmitted/received include data transmitted from the projector-attached mobile phone 10, data stored in the cradle 20, data transmitted from external equipment, and control signals to the projector-attached mobile phone 10. The stereo speaker system 209 stereo-reproduces sound signal output from the CPU 201. The stereo speaker system 209 (left 209L, right209R) includes an amplification circuit. The bore diameter of each speaker is adapted to be greater than the bore diameter of the loudspeaker 111 on the part of the projector-attached mobile phone 10 to enable higher quality reproduction.

The battery 207 is a rechargeable secondary battery, and supplies power to each section in the cradle 20. The power supply circuit 206 includes a DC/DC conversion circuit, a charging circuit, and a voltage detection circuit to convert the voltage of the battery 207 to a voltage required for each section in the cradle 20. Further, the power supply circuit 206 charges the battery 207 with current supplied through a commercial power source through an AC/DC adapter 23 when the voltage of the battery 207 is low and the remaining capacity has been decreased.

The power supply circuit 206 is further configured to perform power supply to the projector-attached mobile phone 10 side mounted on the cradle 20. The battery 207 is configured to have a capacity greater than that of the battery 103 in the projector-attached mobile phone 10, so that the cradle 20 and the projector-attached mobile phone 10 can be sufficiently driven with the power from the battery 207 even when the cradle 20 is not connected to the commercial power source.

The detection switch 208 is turned ON when the projector-attached mobile phone 10 is mounted on the equipment mounting unit 22 on the cradle 20 to send a detection signal to the CPU 201. When the projector-attached mobile phone 10 is not mounted on the equipment mounting unit 22, the detection switch 208 is turned OFF to send no detection signal therefrom.

The projector interface (I/F) 210 transmits/receives data to/from the projector-attached mobile phone 10, more particularly to/from the external interface (I/F) 106 according to an instruction from the CPU 201. The data to be transmitted from the projector-attached mobile phone 10 include, for example, image/sound data, address data, and mail data. The data to be transmitted to the projector-attached mobile phone 10 are control signals to the projector-attached mobile phone 10. The projector interface (I/F) 210 also includes a power line.

### (Projector processing in the projector-attached mobile phone)

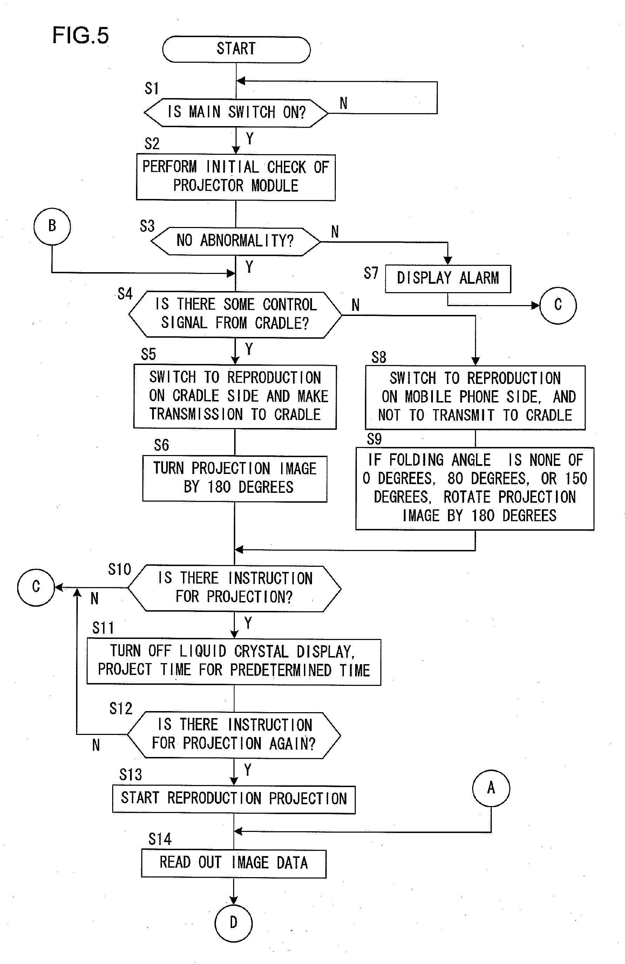

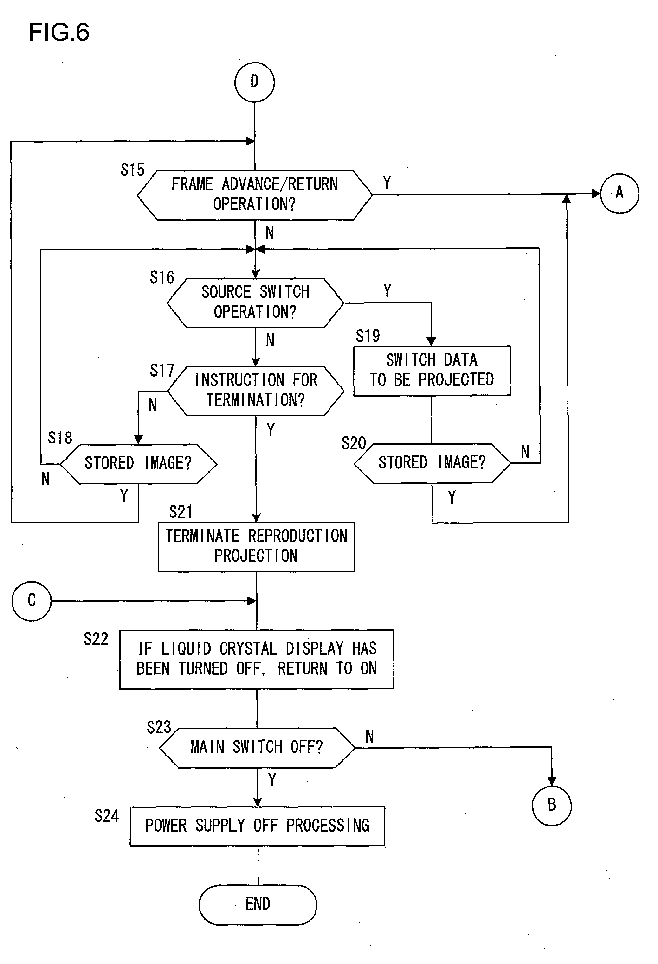

The flow of the projector processing performed by the CPU 101 in the above-mentioned projector-attached mobile phone 10 is detailed with reference to the flowcharts illustrated in FIGS. 5 and 6. The processing illustrated in FIGS. 5 and 6 is started up when the battery 103 is mounted on the projector-attached mobile phone 10. In a step S1 in FIG. 5, the CPU 101 judges whether or not the main switch 14 is turned ON. When the main switch 14 constituting the operation member 110 is long-pressed for 1 second or longer, the CPU 101 judges the result of the judgment in the step S1 to be YES to perform predetermined power source turning ON processing and the flow of control proceeds to a step S2. When the press operation is continued for less than 1 second, the CPU 101 judges the result of the judgment in the step S1 to be NO and the judgment processing is repeated.

In the step S2, the CPU 101 performs initial check of the projector module 6. In concrete terms, the CPU 101 sends an instruction to the projection control circuit 64 to render all the pixels of the liquid crystal panel 62 non-transmissive and causes predetermined current to be supplied to the LED optical source 63 to perform self-check. Then, the flow of control proceeds to a step S3. Since the current to be supplied to the LED optical source 63 is controlled to a low level, with all the pixels of the liquid crystal panel 62 being non-transmissive, light emission at the time of checking will not make the user uncomfortable.

In the step S3, the CPU 101 judges whether or not abnormality is found as a result of the initial check in the step S2. When the current value determined by the projection control circuit 64 is in a predetermined range, the CPU 101 decides that the projector module is normal in the step S3 and the flow of control proceeds to a step S4 while when the current value is outside the predetermined range, the CPU 101 decides it is abnormal and the flow of control proceeds to a step S7.

In the step S7, the CPU 101 performs alarm display and then the flow of control proceeds to a step S22 in FIG. 6. For instance, the alarm display is performed by blinking an LED lamp (not shown) provided on the rear surface of the display section, for example, a lamp for notification of the mobile phone, when a folding angle of θ = 0 degrees is detected by the open-close angle sensor 112. On the other hand, when a folding angle of θ ≠ 0 degrees is detected by the open-close angle sensor 112, the alarm display is performed by causing a message "PROJECTOR IS ABNORMAL" to be displayed on the liquid crystal display 4.

In the step S4, the CPU 101 judges whether or not a control signal is transmitted from the cradle 20. When a control signal is received by the external interface 106, the CPU 101 judges the result of the judgment in the step S4 to be YES and the flow of control advances to a step 5 while the control signal is not received by the external interface (I/F), the CPU 101 judges the result of the judgment in the step S4 to be NO and the flow of control proceeds to a step S8.

When the flow of control proceeds to the step S5, the CPU 101 deems that the projector-attached mobile phone 10 is mounted on the equipment mounting unit 22 on the cradle 20. In the step S5, the CPU 101 switches from reproduction by the loudspeaker 111 to reproduction by the stereo speaker 209 of the cradle 20 and the flow of control proceeds to the step S6. In concrete terms, the destination of sound signal is switched from the loudspeaker 111 to the cradle 20.

In the step S6, the CPU 101 turns the projection data by 180 degrees upon transmission of the projection data to the projection control circuit 64 so that the projection data becomes upside down and the flow of control proceeds to a step S10.

When the flow of control proceeds to the step S8, the CPU 101 deems that the projector-attached mobile phone 10 is used alone. In the step S8, the CPU 101 switches to reproduction by the loudspeaker 111 and the flow of control proceeds to a step S9. In concrete terms, the destination of sound signal is switched from the cradle 20 to the loudspeaker 111.

In the step S9, when the folding angle θ detected by the open-close angle sensor 119 is none of 0 degrees, 80 degrees, and 150 degrees, the CPU 101 turns the projection data to be transmitted to the projection control circuit 64 by 180 degrees to render the projection data upside down and the flow of control proceeds to a step S10. When the detected folding angle θ is any one of 0 degrees, 80 degrees and 150 degrees, the CPU 101 transmits the projection data to the projection control circuit 64 without turning the projection data.

In the step S10, the CPU 101 judges whether or not projection is instructed. In any one of the case in which an ON operation (press operation) signal is input from the optical source ON/OFF switch (projection operation key) 11 that constitutes the operation member 110, the case in which a signal indicative of opening operation of the lens cover 8 is input, and the case in which an ON instruction from the cradle 20 is input through the external interface (I/F) 106, the CPU 101 judges the result of the judgment of the step S10 to be YES and the flow of control proceeds to a step S11. When at least the signal indicative of the opening operation of the lens cover 8 has not been input (a signal indicative of close operation has been input), the CPU 101 judges the result of the judgment in the step S10 to be NO and the flow of control proceeds to the step S22 in FIG. 6.

In the step S11, the CPU 101 sends an instruction to the projection control circuit 64 with a delay of, for example, 3 seconds, causes an image indicating the present time to be projected for a predetermined time (for example, for 10 seconds) and the flow of control proceeds to a step S12. On this occasion, by controlling current to be supplied to the LED optical source 63 so as to increase gradually to a predetermined value, the projection image is gradually made brighter. On the other hand, when the projector-attached mobile phone 10 is not mounted on the cradle 20 but a display is performed on the liquid crystal display 4, the display of the liquid crystal display 4 is turned OFF.

In the step S12, the CPU 101 judges whether or not projection is instructed again. While the image indicating the present time is being projected, if an ON operation (press operation) signal is input from the optical source ON/OFF switch 11 that constitutes the operation member 110, or if an ON instruction is input from the cradle 20 through the external interface (I/F) 106, the CPU 101 judges the result of the judgment in the step S12 to be YES and the flow of control proceeds to a step S13. If none of the above-mentioned signals and ON instruction has been input, the CPU 101 judges the result of the judgment in the step S12 to be NO and the flow of control proceeds to the step S22 in FIG. 6.

In the step S13, the CPU 101 sends an instruction to the projection control circuit 64 to start projection of a reproduced image in place of the image indicating the present time. In a step S14, the CPU 101 reads out image data having the newest recording date from the memory card 104 and the read out image data are selected as image data for reproduction and the flow of control proceeds to a step S15 in FIG. 6. The transmission of the image data for reproduction to the projection control circuit 64 from the CPU 101 causes a reproduction image according to the image data for reproduction to be projected. Note that when sound data are stored in the data file of an image in relation to the image being projected, the CPU 101 controls a sound according to the sound data to be reproduced. The speaker to be used is the one to which switching has been made in the step S5 or step s6.

In the step S15 shown in FIG. 6, the CPU 101 judges whether or not a frame advance/frame return operation has been performed. When an operation signal instructing frame advance or frame return is input from the operation member 110, or from the cradle 20 through the external interface (I/F) 106, the CPU 101 judges the result of the judgment in the step S15 to be YES. When the result of the result of the judgment in the step S15 has been judged to be YES, the flow of control returns to the step S14 in FIG. 5 to read out the image data corresponding to the operation signal from the memory card 104, and the read out image data are selected as image data for reproduction. On the other hand, when no operation signal instructing either frame advance or frame return is input, the CPU 101 judges the result of the judgment in the step S15 to be NO and the flow of control proceeds to a step S16.

The CPU 101 treats the operation signal output from the cursor key 16 for operating the screen as a frame advance/frame return operation signal while an enlarged display is not performed by electric zooming. In addition, the CPU 101 treats the operation signal output from the cursor key 16 as a scroll operation signal in a state where an enlarged display (electrically zoomed) is performed.

In the step S16, the CPU judges whether or not a source switch-over operation has been performed. When an operation signal instructing source switch-over is input therein from the operation member 110 or from the cradle 20 through the external interface (I/F) 106, the CPU 101 judges the result of the judgment in the step S16 to be YES and the flow of control proceeds to a step S19. On the other hand, when no operation signal instructing source switch-over is input, the CPU 101 judges the result of the judgment in the step S16 to be NO and the flow of control proceeds to a step S17.

In the step S17, the CPU 101 judges whether or not it has been instructed to terminate projection. In any one of the case in which an OFF operation (press operation) signal is input from the optical source ON/OFF switch (projection operation key) 11 that constitutes the operation member 110, the case in which a signal indicative of closing operation of the lens cover 8 is input, and the case in which an OFF instruction from the cradle 20 is input through the external interface (I/F) 106, the CPU 101 judges the result of the step S17 to be YES and the flow of control proceeds to a step S21. When none of the above-mentioned signals and OFF instruction has been input therein, the CPU 101 judges the result of the step S17 to be NO and the flow of control proceeds to a step S18.

In the step S21, the CPU 101 sends an instruction to the projection control circuit 64 to terminate projection of reproduction image and the flow of control proceeds to the step s22. The CPU 101 in the step S22, if the display of the liquid crystal display 4 has been turned OFF in the step S11, returns the display of the liquid crystal display 4 to ON and the flow of control proceeds to a step S23. If the display of the liquid crystal display 4 has not been turned OFF in the step S11, the flow of control proceeds to the step S23 as it is.

In the step S18, the CPU 101 judges whether or not the image data for reproduction correspond to a stored image. If the image data for reproduction correspond to the (source 1), the CPU 101 judges the result of the judgment in the step S18 to be YES and the flow of control returns to the step S15. On the other hand, if the image data for reproduction correspond to either one of the (source 2) and the (source 3), the CPU 101 judges that the result of the judgment in the step S18 is NO, and the flow of control returns to the step S16.

In the step S19, the CPU 101 switches over the image data to be projected (image data for reproduction) and the flow of control proceeds to a step S20. In concrete terms, for every source switch-over operation, the data read out from the memory card 104 (source 1), the data received by the communication control unit 108 (source 2), and the data input from the external interface (I/F) 106 (source 3) are cyclically switched over and the flow of control proceeds to the step S20. Further, if a data selection operation is performed in a state in which (source 1) is selected, the CPU 101 switches over data to be read out from the memory card 104 cyclically in the order of image → address → mail → image ... The address data are those data that constitute an address book and the mail data are data that constitute mails in the mail box.

Here, in the case in which the image data to be projected are switched to data input from the external interface (I/F) 106 (source 3), the CPU 101 controls a projection source request signal to be transmitted from the external interface (I/F) 106 to the cradle 20.

In the step S20, the CPU 101 judges whether the image data for reproduction after the switch-over correspond to a stored image. If the image data for reproduction correspond to the (source 1), the CPU 101 judges the result of the judgment in the step S20 to be YES and the flow of control returns to the step S14 in FIG. 5. In the step S14, data are read out from the memory card 104 and the read out image data are selected as image data for reproduction. On the other hand, if the image data for reproduction correspond to any one of the (source 2) and the (source 3), the CPU 101 judges that the result of the judgment in the step S20 is NO, and the flow of control returns to the step S16. In this case, the judgment on the frame advance/return operation is unnecessary.

In the step S23, the CPU 101 judges whether or not the main switch 14 has been turned OFF. If the main switch 14 that constitutes the operation member 110 is subject to OFF operation, for example, a long press operation for 1 second or longer, the CPU 101 judges that the result of the judgment in the step S23 is YES, and the flow of control proceeds to a step S24. If the main switch 14 is not turned OFF, the CPU 101 judges the result of the judgment in the step S23 to be NO and the flow of control returns to the step S4 in FIG. 4. In the step S24, the CPU 101 performs predetermined power supply OFF processing to terminate the routine shown in FIGS. 5 and 6.

Note that it is configured that the CPU 101 controls the projector module 6 to prohibit projection even during the processing as shown in FIGS. 5 and 6, if the voltage of the battery 103 detected in the power supply circuit 107 becomes below a predetermined threshold for judgment that is necessary for projection. In the prohibited state, the projection that is being performed is terminated and projection will not be started even if an instruction to perform projection is given.

Further, it is configured that if, in midstream of the processing shown in FIGS. 5 and 6, the projection time continues for a predetermined time without termination instructions or operation signals, the CPU 101 controls the system to perform auto power off. In concrete terms, the CPU 101 performs the processing in the steps S21, S22, and S24 forcibly to terminate the processing shown in FIGS. 5 and 6. In this case, the predetermined time is set as "continuous projection time" in the "menu screen" as described hereinbelow.

Further, if, in the midstream of the processing shown in FIGS. 5 and 6, switching operation to switch the mode to a mode of camera photographing by the camera module 7 through the operation key 17 is performed, the CPU 101 terminates the projection by the projector module 6.

### (Main processing by cradle)

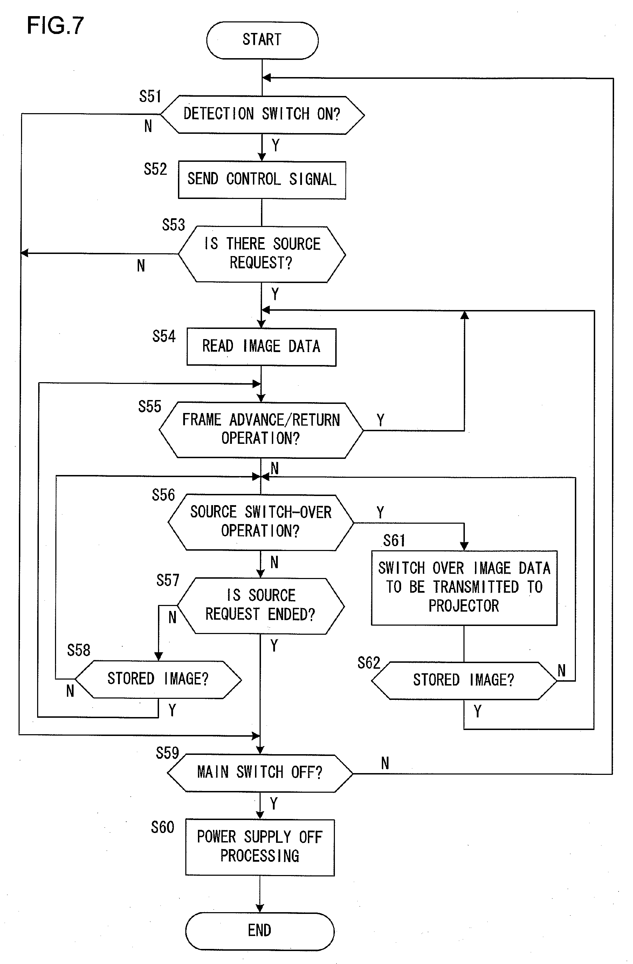

The flow of the above-mentioned main processing to be performed by the CPU 201 of the cradle 20 is described with reference to the flowchart illustrated in FIG. 7. The processing shown in FIG. 7 is started up when the main switch that constitutes the operation member 21 is turned ON. In a step S51 in FIG. 7, the CPU 201 judges whether or not a detection switch 208 is turned ON. When a detection signal is input from the detection switch 208 (detection switch being turned ON), the CPU 201 judges the result of the judgment in the step S51 to be YES and the flow of control proceeds to a step S52. On the other hand, when no detection signal is input from the detection switch 208 (detection switch being OFF), the CPU 201 judges the result of the judgment in the step S51 to be NO and the flow of control proceeds to a step S59.

In the step S52, the CPU 201 controls the projector interface (I/F) 210 to transmit a control signal to the projector-attached mobile phone 10 and the flow of control proceeds to a step S53. In the step 553, the CPU 201 judges whether or not a projection source has been requested by the projector-attached mobile phone 10. When a projection source request signal is received by the projection interface (I/F) 210, the CPU 201 judges the result of the judgment in the step S53 to be YES and the flow of control proceeds to a step S54. On the other hand, when no projection source request signal is received by the projection interface (I/F) 210, the CPU 201 judges the result of the judgment in the step S53 to be NO and the flow of control proceeds to the step S59.

In case the flow of control proceeds to the step S59, the CPU 201, when a voice signal is transmitted thereto from the projector-attached mobile phone 10, controls the stereo speaker system 209 to stereo reproduce a voice according to the voice data received by the projection interface (I/F) 210.

In the step S54, the CPU 201 reads out image data having the newest recording date from the memory card 211 and the read out image data are selected as image data to be transmitted to the projector-attached mobile phone 10. The transmission of the image data to the projector-attached mobile phone 10 causes reproduction image according to the image data to be projected by the projector-attached mobile phone 10. Note that when voice data are stored in the data file of the image being projected, the CPU 201 controls the stereo speaker 209 to stereo reproduce a voice according to the voice data.

In a step S55, the CPU 201 judges whether or not a frame advance/frame return operation has been performed. If an operation signal instructing frame advance or frame return is input from the operation member 21, the CPU 201 judges the result of the judgment in the step S55 to be YES and the flow of control returns to the step S54. In the step S54, the image data corresponding to the operation signal are read out from the memory card 211, and the read out image data are selected as image data to be transmitted to the projector-attached mobile phone 10. On the other hand, if no operation signal instructing either frame advance or frame return is input from the operation member 21, the CPU 201 judges the result of the judgment in the step S55 to be NO and the flow of control proceeds to a step S56.

In the step 556, the CPU 151 judges whether or not a source switch-over operation has been performed. If an operation signal instructing source switch-over is input from the operation member 21, the CPU 151 judges the result of the judgment in the step S56 to be YES and the flow of control proceeds to a step S61. On the other hand, if no operation signal instructing source switch-over is input, the CPU 201 judges the result of the judgment in the step S56 to be NO and the flow of control proceeds to a step S57.

In the step S57, the CPU 201 judges whether or not projection source request is terminated. If no signal requesting a projection source has come to be input through the projector interface (I/F) 210, the CPU 201 judges the result of the judgment in the step S57 to be YES and the flow of control proceeds to the step S59. On the other hand, if the request for a projection source is continued, the CPU 201 judges the result of the judgment in the step S57 to be NO and the flow of control proceeds to a step S58.

In the step S58, the CPU 201 judges whether or not the image data being transmitted to the projector-attached mobile phone 10 correspond to a stored image. If the image data being transmitted to the projector-attached mobile phone 10 correspond to a stored image stored in any of the memory card 211, the memory card 212, and the hard disk drive (HDD) 204, the CPU 201 judges the result of the judgment in the step S58 to be YES and the flow of control returns to the step 555. On the other hand, when the image data being transmitted to the projector-attached mobile phone 10 correspond to the image input from the external interface (I/F) 205, the CPU 201 judges the result of the judgment in the step S58 to be NO and the flow of control returns to the step 556.

In the step S61, the CPU 201 switches over the image data to be transmitted to the projector-attached mobile phone 10 and the flow of control proceeds to a step S62. In concrete terms, for every source switch-over operation, the image data read out from the memory card 211, the image data read out from the memory card 212, the image data read out from the hard disk drive (HDD) 204, and the image data input from the external interface (I/F) 205 are sequentially switched over and the flow of control proceeds to the step S62. Note that if no memory card is attached to the cradle 20, the reading out of the image data from the corresponding recording medium is skipped.

In the step S62, the CPU 201 judges whether or not the image data to be transmitted to the projector-attached mobile phone 10 correspond to a stored image. If the image data to be transmitted to the projector-attached mobile phone 10 correspond to a stored image stored in any of the memory card 211, the memory card 212, and the hard disk drive (HDD) 204, the CPU 201 judges the result of the judgment in the step S62 to be YES and the flow of control returns to the step S54. In this case, in the step S54, image data are read out from the corresponding recording medium and the read out image data are selected as image data to be transmitted to the projector-attached mobile phone 10. On the other hand, if the image data to be transmitted to the projector-attached mobile phone 10 have been switched over to image data to be input from the external interface (I/F) 205, the CPU 201 judges the result of the judgment in the step S62 to be NO and the flow of control returns to the step S56. In this case, judgment on the frame advance/return operation is unnecessary.

In the step 559, the CPU 201 judges whether or not the main switch has been turned OFF. If the main switch that constitutes the operation member 21 is turned OFF, the CPU 201 judges the result of the judgment in the step S59 to be YES and the flow of control proceeds to a step S60. On the other hand, if the main switch is not turned OFF, the CPU 201 judges the result of the judgment in the step S59 to be NO and the flow of control returns to the step S51. In the step S60, the CPU 201 performs predetermined power supply OFF processing to terminate the routine shown in FIG. 7.

### (Menu setting of projector-attached mobile phone)

The projector-attached mobile phone 10 according to the present embodiment notifies receipt of a phone call or mail by projection image by the projector module 6. The content of setting to be performed to the projector-attached mobile phone 10 in order to perform this notification is described.

The projector-attached mobile phone 10, when the operation key 12 that constitutes the operation member 110 is pressed, displays a "menu screen" on the liquid crystal display 4. The menu screen contains an internet access menu (named screen A), a projector adjustment menu (named screen B), an incoming setting menu (named screen C) and so on. Usually, the internet access menu (screen A) is first displayed in response to press operation of the operation key 12.

In this state, if the cursor key 16 for setting the screen is operated rightward, the projector-attached mobile phone 10 cyclically switches over the menu screens on the liquid crystal display 4 in the order of screen A → screen B →screen C →, ..., → screen A. On the other hand, if the cursor key 16 is operated leftward, the projector-attached mobile phone 10 cyclically switches over the menu screen to be displayed on the liquid crystal display 4 in the order of screen A →, ..., → screen C → screen B → screen A. The leftward and rightward operation signals by the cursor key 16 in the display of the menu screen correspond to menu screen selection instructions.

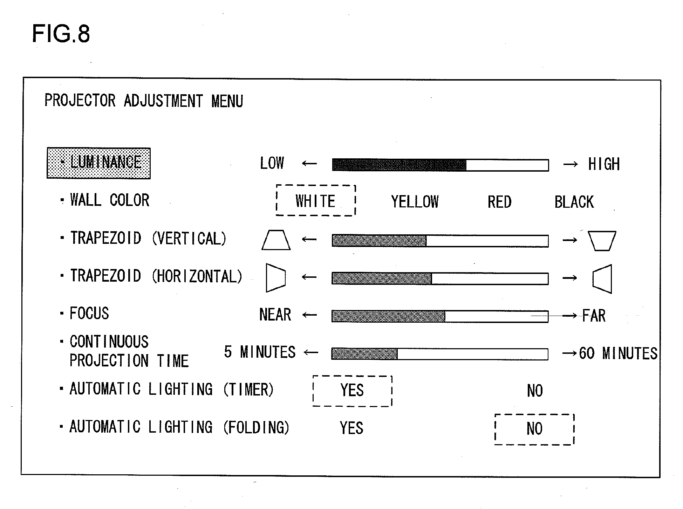

FIG. 8 is a diagram showing an example of projector adjustment menu (screen B) among the menu screens. In FIG. 8, items such as luminance, wall color, trapezoid (vertical), trapezoid (horizontal), focus, continuous projection time, auto lighting (timer), and auto lighting (folding) are displayed and the cursor is laid on the "luminance" (as framed) at the front. In this state, if the cursor key 16 for operating the screen is operated downward, the projector-attached mobile phone 10 shifts the position of the cursor downward. On the other hand, if the cursor key 16 for operating the screen is operated upward, the projector-attached mobile phone 10 shifts the position of the cursor upward. The upward and downward operation signals by the cursor key 16 in the display of the menu screen correspond to item selection instructions.

"Luminance" represents luminance of projection by the projector module 6. The CPU 101 of the projector-attached mobile phone 10 instructs an increase or decrease of current to be supplied to the LED optical source 63 to the projection control circuit 64 depending on the settings of the "luminance". "Wall color" represents the color of screen or wall toward which the projector module 6 projects and the CPU 101 of the projector-attached mobile phone 10 instructs the projection control circuit 64 to vary color temperature adjustment value depending on the settings of the "wall color". The projection control circuit 64 adjusts signal ratios of RGB of the liquid crystal panel 62 to make the color of the image projected on the screen to be easily caught by the viewer.

"Trapezoid (vertical)" represents Keystone compensation in the vertical direction, according to the settings of which the CPU 101 of the projector-attached mobile phone 10 performs Keystone compensation in the vertical direction. "Trapezoid (horizontal)" represents Keystone compensation in the horizontal direction, according to the settings of which the CPU 101 of the projector-attached mobile phone 10 performs Keystone compensation in the horizontal direction.

"Focus" represents focus adjustment of a projection image, according to the settings of which the CPU 101 of the projector-attached mobile phone 10 sends a focus adjusting signal to the projection control circuit 64. "Continuous projection time", which corresponds to the measuring time for the above-mentioned auto power off, may be set within, for example, 5 to 60 minutes. The CPU 101 of the projector-attached mobile phone 10 performs auto power off processing according to the settings of the "continuous projection time".

"Auto lighting (timer)" represents timer action that automatically starts projection, according to the settings of which the CPU 101 of the projector-attached mobile phone 10 performs timer-controlled projection. In the case of timer-controlled projection, when a predetermined time is reached, the projector module 6 is caused to automatically start projection. The CPU 101 of the projector-attached mobile phone 10, after the projection has started, terminates the projection in response to a pressing operation of the projection operation key 11 or a lapse of continuous projection time, whichever comes first.

"Auto lighting (folding)" represents an action to automatically start projection in response to an operation to vary the folding angle θ, and the CPU 101 of the projector-attached mobile phone 10 controls the projector module 6 to start projection according to the settings of this item. For example, when the projection operation key 11 is pressed and the folding angle is set to θ = 80 degrees, the projector module 6 is caused to start projection. The CPU 101 of the projector-attached mobile phone 10 after the start of the projection terminates the projection if the projection operation key 11 is pressed or if the continuous operation time is elapsed, whichever is first.

The projector-attached mobile phone 10, when the operation key 13 constituting the operation member 110 is pressed, displays with highlight the settings relating to the item selected by the cursor on that time in point. FIG. 8 shows an example in which the settings relating to "luminance" are displayed with highlight and the settings relating to other items are displayed dark. In FIG. 8, the luminance adjustment setting is indicated in a bar graph. If the cursor key 16 for operating the screen is operated leftward, the projector-attached mobile phone 10 causes the content of the bar graph to be shifted leftward (low luminance side) to vary the projection luminance by the projection module 6 to a level lower than the presently set luminance.

On the contrary, if the cursor key 16 for operating the screen is operated rightward, the projector-attached mobile phone 10 causes the content of the bar graph to be shifted rightward (high luminance side) to vary the projection luminance by the projection module 6 to a level higher than the presently set luminance. The leftward and rightward operation signals by the cursor key 16 with the settings being displayed with highlight correspond to settings varying instructions.

If the settings are not control amounts that can be continuously varied, the projector-attached mobile phone 10 indicates the set state with the cursor. For example, in a state in which the settings relating to "wall color" is displayed with highlight, the projector-attached mobile phone 10 causes the cursor to be shifted leftward: black → red → yellow → white, if the cursor key 16 for operating the screen is operated leftward while the projector-attached mobile phone 10 causes the cursor to be shifted rightward: white → yellow → red → black, if the cursor key 16 for operating the screen is operated rightward.

In the menu screen, settings relating to all the items before the operation key 13 are pressed and settings relating to the items not selected by the cursor (other items excluding "luminance" in FIG. 8) are each displayed dark.

The projector-attached mobile phone 10, if the operation key 13 that constitutes the operation member 110 is pressed again, stores the varied settings and then terminates the displaying with highlight and causes the displaying of the settings relating to the item concerned to return to be dark.

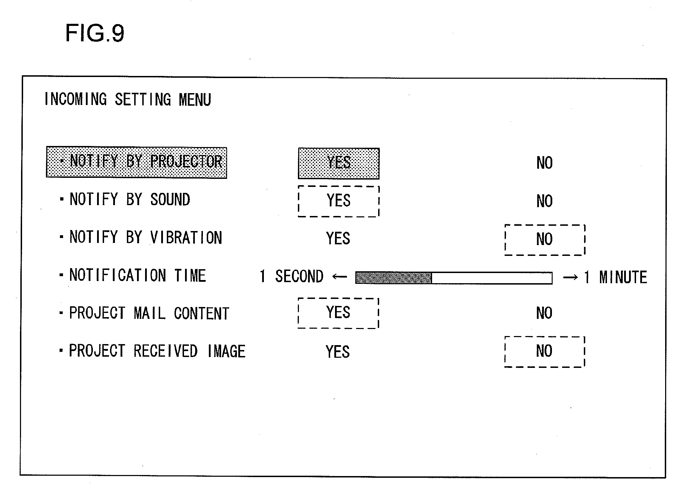

FIG. 9 exemplifies the incoming setting menu (screen C) among the menu screens. In FIG. 9, there are displayed items such as "notify by projector", "notify by sound", "notify by vibration", "notification time", "project mail content", and "project received image", with the cursor being laid on "notify by projector" (as framed) at the front. In this state, if the cursor key 16 for operating the screen is operated downward, the projector-attached mobile phone 10 shifts the position of the cursor downward. On the other hand, if the cursor key 16 for operating the screen is operated upward, the projector-attached mobile phone 10 shifts the position of the cursor upward.

"Notify by projector" represents incoming notification by the projector module 6, according to the settings of which the CPU 101 of the projector-attached mobile phone 10 sends an instruction to the projection control circuit 64. In the case where "YES" is selected, the incoming notification information is overlay-projected in superposition on the projection image being projected by the projector module 6.

"Notify by sound" represents incoming notification by the loudspeaker 111, according to the settings of which the CPU 101 of the projector-attached mobile phone 10 causes the loudspeaker 111 to reproduce a sound. The reproduction sound is reproduced according to prestored voice guide data or data of prestored incoming melody.

"Notify by vibration" represents incoming notification by a vibration generating device (not shown), according to the settings of which the CPU 101 of the projector-attached mobile phone 10 controls the vibration generating device to generate vibration. "Notification time" represents a period of time for which the incoming notification is continued, according to the settings of which the CPU 101 of the projector-attached mobile phone 10 continues the incoming notification.

"Project mail content" represents an action of projecting the content of a mail in response to a mail display operation, according to the settings of which the CPU 101 of the projector-attached mobile phone 10 controls the projector module 6 to project the content of the mail or controls the liquid crystal display 4 to display the content of the mail.

"Project received image" represents an action of projecting a received image in response to a display operation, according to the settings of which the CPU 101 of the projector-attached mobile phone 10 controls the projector module 6 to project the received image or controls the liquid crystal display 4 to display the received image.

The projector-attached mobile phone 10, when the operation key 13 constituting the operation member 110 is pressed, displays with highlight the settings relating to the item selected by the cursor at that point in time. FIG. 9 shows an example in which the settings relating to "notify by projector" are highlight-displayed and the settings relating to other items are displayed dark. In FIG. 9, the state of setting is indicated by the cursor. If the cursor key 16 for operating the screen is operated leftward, the projector-attached mobile phone 10 causes the cursor to be shifted leftward. On the contrary, if the cursor key 16 for operating the screen is operated rightward, the projector-attached mobile phone 10 causes the cursor to be shifted rightward.

The projector-attached mobile phone 10, when the operation key 13 that constitutes the operation member 110 is pressed again, stores the varied settings and then terminates the display with highlight and causes display of the settings relating to the item concerned to return to be dark.

### (Incoming processing by projector-attached mobile phone)

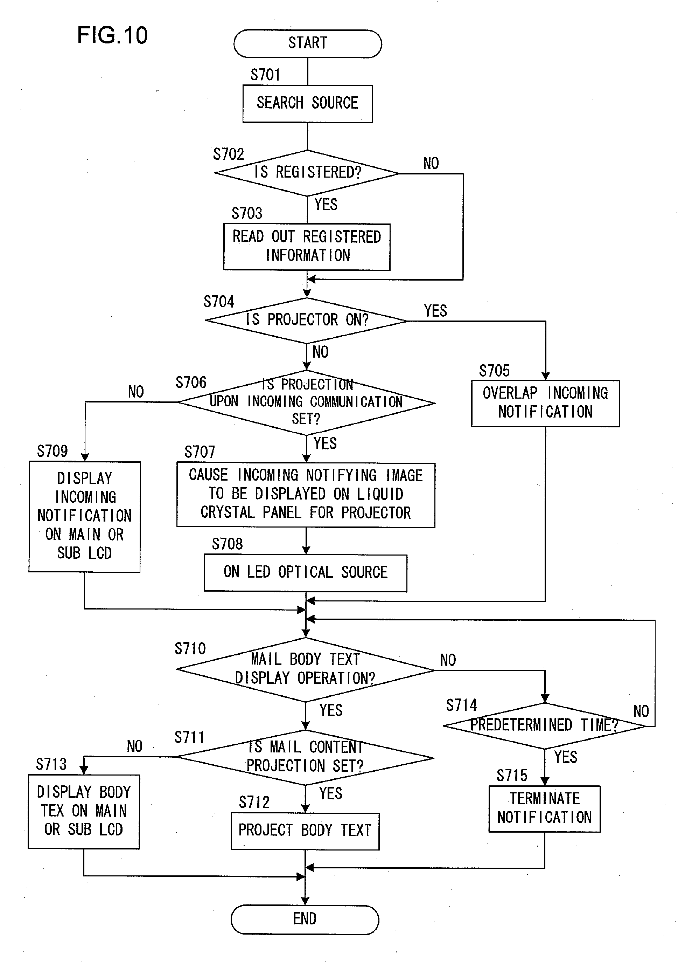

The flow of incoming processing performed by the CPU 101 of the projector-attached mobile phone 10 having the above-mentioned menu settings is explained with reference to the flowchart shown in FIG. 10. The processing illustrated in FIG. 10 is started up when an incoming notification is sent from the communication control unit 108 during the above-mentioned projector processing. In a step S701in FIG. 10, the CPU 101 searches a source (sender in the case of a mail). The CPU 101 accesses a database provided in a non-volatile memory (not shown) in the CPU 101 to search an addressor phone number (an addressor mail address in the case of a message) and the flow of control proceeds to a step S702.

In the step S702, the CPU 101, if the addressor phone number (mail address in the case of a mail) is recorded in the database, judges the result of the judgment in the step S702 to be YES and the flow of control proceeds to a step S703 while if such is not recorded in the database, judges the result of the judgment in the step S702 to be NO and the flow of control proceeds to a step S704.

In the step S703, the CPU 101 reads out recorded information from the database and the flow of control proceeds to the step S704. In the case of an incoming phone call, a name of recorded person corresponding to the addressor phone number is read out while in the case of an incoming message, a name of recorded person corresponding to the addresser mail addresses is read out.

In the step 5704, the CPU 101 judges whether or not the projector is ON. The CPU 101, if the projector module 6 is controlled to project a content, judges the result of the judgment in the step S704 to be YES and the flow of control proceeds to a step S705 while if the projector module 6 is controlled not to project a content, judges the result of the judgment in the step S704 to be NO and the flow of control proceeds to a step S706.

In the step S705, the CPU 101 causes the incoming notification to be displayed in a superimposed and the flow of control proceeds to a step S710. In concrete terms, the CPU 101 sends an instruction to the projection control circuit 64 to cause overlay projection to be performed by superimposing a character string indicating the name of person recorded on the content data that is being projected so as not to interfere with the projection image. In this manner, the incoming notification is projected with the character string superimposed on part of the projected image. Note that if an addressor phone number is not recorded in the case of an incoming phone call, the character string indicating the addressor phone number is projected over the content data being projected. If an addressor mail address is not recorded in the database in the case of an incoming message, the character string indicating the addressor mail address is projected superimposed on the content data being projected.

In the step S706, the CPU 101 judges whether or not to perform projection upon an incoming communication. The CPU 101, if "notify by the projector" is set "Yes" in the incoming call setting menu, judges the step S706 to be YES and the flow of control proceeds to a step S707. If "notify by the projector" is set "No" in the incoming setting menu, the CPU 101 judges the result of the judgment in the step S706 to be NO and the flow of control proceeds to a step S709.

In the step S707, the CPU 101 sends an instruction to the projection control circuit 64 to cause the liquid crystal panel 62 to display an incoming notification image thereon and the flow of control proceeds to a step 5708. The incoming notification image is a reproduction image according to image data having been related to names of recorded persons, respectively, on the database, and any one of a still image, a moving image, an icon, an animation, a text image and so on is provided in advance. If the addressor is not recorded in the database, a reproduction image according to general-purpose image data provided in advance is displayed. In this case, an incoming communication from an addressor not recorded is notified with a common reproduction image.

In the step S708, the CPU 101 sends an instruction to the projection control circuit 64 to cause the LED optical source 63 to turn ON and the flow of control proceeds to the step 5710. As a result of this, an incoming notification image is projected from the projector module 6. Note that the CPU 101, if "notify by sound" is set "Yes", or if "Notify by vibration" is set "Yes" in the incoming setting menu, controls the loudspeaker or vibration generating device (not shown) to perform notification according to each setting. The sound is a reproduction sound according to the sound data related to the names of persons recorded, respectively, on the database; any one of incoming melody, a guide message, a sound effect and so on is provided in advance. If the addressor is not recorded in the database, general-purpose sound data provided in advance are reproduced. In this case, the incoming communication from an addressor not recorded is notified using a common reproduction sound.

In the step S709, the CPU 101 controls the liquid crystal display 4 to display the incoming notification thereon and the flow of control proceeds to the step S710. Note that if the projector-attached mobile phone 10 is provided with a sub-LCD (liquid crystal display), the incoming notification may be displayed on the sub-LCD. If "notify by sound" is set "Yes" or if "notify by vibration" is set "Yes" in the incoming setting menu, the CPU 101 controls the loudspeaker or the vibration generating device to perform the notification according to respective settings.

The CPU 101 that has notified an incoming phone call, if an operation for answering a phone call is performed, that is, in concrete terms, if the operation key 15 constituting the operation member 110 is pressed, shifts control to phone action. If the incoming notification image (including overlay projection) is projected by the projector module 6, the CPU 101 shifts control to the phone action after the projection by the projector module 6 is terminated. In this description, explanation on the process of phone action is omitted.

The CPU 101 that has notified an incoming mail judges in the step S710 whether or not a mail body text display operation is performed. The CPU 101, if the operation key 13 that constitutes the operation member 110 is pressed, judges the result of the judgment in the step S710 to be YES and the flow of control proceeds to a step S711. On the other hand, if the operation key 13 is not pressed, the CPU 101 judges the result of the judgment in the step S710 to be NO and the flow of control proceeds to a step S714.

In the step S711, the CPU 101 judges whether or not mail content projection setting is made. The CPU 101, if "project mail content" is set "Yes" in the incoming setting menu, judges the result of the judgment in the step S711 to be YES and the flow of control proceeds to a step S712. If "project mail content" is set "No" in the incoming setting menu, the CPU 101 judges the result of the judgment in the step S711 to be NO, and the flow of control proceeds to a step S713.

In the step S712, the CPU 101 sends an instruction to the projection control circuit 64 to cause the liquid crystal panel 62 to display the mail body text. As a result of this, the mail body text is projected by the projector module 6. Note that the CPU 101 is configured to, if "project received image" is set "Yes" in the incoming setting menu, control the liquid crystal panel 62 to display a received image in response to the operation of opening attached image file. As a result, it is possible to cause the projector module 6 to project a received image. The CPU 101, having performed projection in this manner, terminates the routine illustrated in FIG. 10.

In the step S713, the CPU 101 controls the liquid crystal display 4 to display the mail body text, and terminates the projection by the projector module 6 and then terminates the routine illustrated in FIG. 10. Note that if a sub-LCD (liquid crystal display) is provided, the mail body text may be displayed in the sub-LCD.

In the step S714, the CPU 101 judges whether or not time elapsed from the incoming notification has reached a predetermined time. The predetermined time is time set as "notification time" in the incoming setting menu. The CPU 101, when the predetermined time has been elapsed, judges the result of the judgment in the step S714 to be YES and the flow of control proceeds to a step S714 whereas if the predetermined time has not been elapsed, the CPU 101 judges the result of the judgment in the step S714 to be NO and the flow of control returns to the step S710. When the flow of control returns to the step S710, the incoming notification is continued.

In the step S715, the CPU 101 controls the projector module 6 to terminate projection (notification of an incoming call) and then the flow of control of this routine terminates.

If the projector-attached mobile phone 10 is set to a well-knownmannermode, the CPU 101 controls the flow to proceed to the step S709 even if the projection upon an incoming communication is set. When the manner mode (silent mode) is set, the projector-attached mobile phone 10 performs notification, for example, by generating vibration by the vibration generating device (not shown) instead of generating an incoming notifying sound at the time of an incoming communication. That is, even if "notify by projector" is set "Yes" in the incoming setting menu, the CPU 101 prohibits the projector module 6 to perform projection (incoming notification) but controls the liquid crystal display 4 to perform the incoming notification. Note that, if the projection operation key 11 is pressed in a manner mode, the CPU 101 controls the projector module 6 to start projection.

According to the embodiment detailed above, the following operational effects can be obtained.
(1) Since the projector-attached mobile phone 10 is configured to check the projector module 6 when the main switch is turned ON (step S2), when there is an abnormality, the user can be notified of the abnormality before projection is instructed (step S7).

(2) Since the projector-attached mobile phone 10 does not permit projection (does not start projection) until projection is instructed, projection light will not be output before the user is prepared unlike the case in which projection is automatically started after the main switch is turned ON.

(3) The projector-attached mobile phone 10 is configured to prohibit (does not permit) projection by the projector module 6 if the voltage of the battery 103 detected by the power supply circuit 107 becomes below a predetermined threshold for judgment. Since generally, a large amount of current is consumed at the time of projection, if projection is performed in a state in which the battery 103 has been almost exhausted, the voltage of the battery 103 is decreased still more rapidly. By prohibiting projection to suppress consumption of current, the battery 103 can last longer.

(4) The projector-attached mobile phone 10 does not judge that there is a projection instruction (the result of the judgment in the step S10 is NO) unless at least a signal indicative of opening operation of the lens cover 8 is output. This prohibits start of projection in a state in which the lens cover 8 is closed to avoid the possibility that useless projection action is performed.

(5) Since the projector module 6 and the camera module 7 are protected by the common lens cover 8, the structure of the equipment can be made simpler than the case where the lens cover is provided separately.

(6) The projector-attachedmobile phone 10 is configured to perform auto power off to terminate (prohibit) projection if the time of continuous projection by the projector module 6 reaches the time set as "continuous projection time" in the projector adjustment menu even if the processing illustrated in FIGS 5 and 6 is on the way. With this configuration, an increase in temperature exceeding an allowable range or consumption of current exceeding an allowable range can be suppressed. Timing is performed by the CPU 101.

(7) Since the projector-attached mobile phone 10 is configured to turn off the display by the liquid crystal display 4 if the projection is performed by the projector module 6 (such as in the step S11), the consumption of current is suppressed, so that the battery 103 can last longer.

(8) Since the projector-attached mobile phone 10 is configured to perform projection indicating present time for a predetermined time (10 seconds in the above-mentioned example) in response to the instruction for projection (step S11), the user can know time in a dark room too. Further, by performing projection for a predetermined time, the operation of terminating projection can be omitted and in addition power can be saved as compared with the case in which projection is continued.

(9) Since it is configured that upon starting projection, an instruction is sent to the projection control circuit 64 with a delay of 3 seconds from the instruction for projection, if the operator is present in the direction of projection (on the aperture side of the projector module 6), he or she after the operation can move to a location where projection light is not thrown thereon. Further, since the projection image made gradually brighter until a predetermined luminance is reached, there is no possibility that the viewer feels too bright due to an instantaneous increase in luminance.

(10) Since an upper limit (for example, 60 minutes) is defined in "continuous projection time" in the projector adjustment menu so as to prohibit continuous projection by the projector module 6, the LED optical source 63 will not be under continuous light emission without limit, so that useless consumption of power due to neglecting turning off the power can be prevented.

(11) The equipment is configured such that if the projector-attached mobile phone 10 is set in a manner mode, projection by the projector module 6 is not performed but the liquid crystal display 4 is caused to display incoming notification even if projection upon an incoming communication is set in the incoming setting menu. This prevents the projector module 6 from starting projection despite the intention of the user, for example, in a meeting or in a vehicle.

(12) Since the projector-attached mobile phone 10 is configured to automatically turn off the display by the liquid crystal display 4 when projection is performed by the projector module 6 (for example, in the step S11), it is unnecessary to perform an operation of turning off the display of the liquid crystal display 4 separately from an instruction for projection, so that the equipment is user-friendly.
(13) The projector-attached mobile phone 10 treats an operation signal output from the cursor key 16 for operating the screen in a non-enlarged display (not electrically zoomed) state as a frame advance/frame return operation signal for the projection image whereas treats an operation signal output from the cursor key 16 in an enlarged display (electrically zoomed) state as a scroll operation signal for the projection image. This makes it unnecessary to provide an operation member for frame advance/frame return for projection or an operation member for scroll.

(14) Since the equipment is configured such that in the projector adjustment menu, "luminance", "wall color", "trapezoid", and "focus" of the projection image by the projector module 6 are each adjustable, any desired projection image can be obtained. In addition, since the contents set in each item are indicated by a bar graph or the like, the equipment is user-friendly. Note that the projector adjustment menu may include at least one of the above-mentioned adjustment item and other adjustment items may be further added.

(15) Further, since the setting of "continuous projection time" is included in the same menu screen as each item in (14) above, settings relating to projection can be performed in the common menu screen.

(16) The projector-attached mobile phone 10 is configured such that if phone call starting operation is performed during projection of contents by the projector module 6, the projection is interrupted and after completion of the phone call, the projection is restarted. In concrete terms, the projector-attachedmobile phone 10 is configured such that if an operation signal for starting phone call is input from the operation key 15 into the CPU 101, the projection is interrupted and if an operation signal for completing the phone call is input again from the operation key 15 into the CPU 101, the projection is restarted. This makes it unnecessary to perform an operation to interrupt/restart projection separately from the operation of phone call, so that the equipment becomes user-friendly.

(17) The projector-attached mobile phone 10 terminates projection if a switch-over operation to a photographing mode by the camera module 7 is performed during projection of contents by the projector module 6. This makes it unnecessary to perform an operation for completing the projection separately from the operation of switching over to the photographing mode, so that the equipment becomes user-friendly.

(18) The projector-attached mobile phone 10 is configured such that if there is an incoming communication in a state "notify by projector" is set "Yes" in the incoming call setting menu, the incoming communication is notified by the projection image by the projector module 6 and if the notification time reaches the time set in the incoming setting menu, the incoming notification by the projector module 6 is automatically terminated. This prevents continuation of useless continuation of incoming notification in the absence of the user.

(19) The projector-attached mobile phone 10, when the projector module 6 is performing projection if there is an incoming communication (the result of the judgment in the step S704 is YES), the incoming communication is notified by the projection image by the projector module 6 regardless of whether or not "notify by the projector" is set "Yes" in the incoming setting menu. On this occasion, since the projection image for notification is overlay-displayed in superposition over the content data that is being projected so as not to interfere with the projection image, notification can be performed without interrupting the projection of the content.

Note that the equipment may be configured such that the notification method using overlay projection in superposition over the content data that is being projected as in (19) above or the notification method that performs incoming notification instead of the content data that is being projected is selected in the incoming setting menu. Further, the equipment may be configured such that even if the projector module 6 is projecting content when an incoming communication is present (the result of the judgment in the step S704 is YES), incoming notification is performed only when "notify by projector" is set to "Yes" in the incoming setting menu.

### (Variation Example 1)

In FIG. 5, if it is judged that the projector-attached mobile phone 10 is mounted on the equipment mounting unit 22 on the cradle 20 (the result of the judgment in the step S4 is YES), the luminance of projection image may be set higher than that in an ordinary time. Here, the term "ordinary time" means the case in which the projector-attached mobile phone 10 is used alone. In this case, the CPU 101 sends an instruction to the projection control circuit 64 to increase current to be supplied to the LED optical source 63 by a predetermined amount of current as compared with a level in the ordinary time.

The CPU 101 after having increased the luminance of the projection image, if it is judged that the projector-attached mobile phone 10 is used alone (the result of the judgment in the step S4 is NO), controls the luminance of the projection image to be decreased to a level lower than that of the case where it is used as mounted on the cradle 20. In this case, the CPU 101 sends an instruction to the projection control circuit 64 to decrease current to be supplied to the LED optical source 63 to the ordinary level. By suppressing consumption of current when the projector-attached mobile phone 10 is used alone, the battery 103 can last longer.

### (Variation Example 2)

In the step S11 in FIG. 5, the projection indicating present time is performed for a predetermined time (for example, 10 seconds). However, instead of present time, information such as news and values of stock obtained on the Internet, and information such as already provided messages and unread mails having been received may be projected. Note that the projection time is not limited to 10 seconds and set variable to any desired time in advance. Further, it may be acceptable to configure the equipment such that instead of performing projection for a predetermined time (for example, 10 seconds) starting from an instruction for projection, the projection is continued while the instruction for projection is being continued.

### (Variation Example 3)

While the example of mounting the CPU 201 on the cradle 20 has been explained, it may also be acceptable to configure the cradle 20 to include no CPU. In this case, the CPU 101 of the projector-attached mobile phone 10 judges that the projector-attached mobile phone 10 is mounted on the cradle if power is supplied from the cradle that has mounted no CPU thereon to the projector-attached mobile phone 10 through a power line of the external interface (I/F) 106 whereas if power is not supplied to the CPU 101, the CPU 101 judges that the projector-attached mobile phone 10 is used alone.

### (Variation Example 4)

In the above explanation, although the equipment is configured such that the setting of whether or not to perform the incoming notification by projection image by the projector module 6 is performed on all the incoming communications in common, the equipment may be configured to perform notify/not notify of an incoming communication source by source. In this case, whether or not to notify using the projector is registered for each registrant on the database in advance. This enables an incoming communication to be notified by projection image by the projector module 6 or by the liquid crystal display 4 depending on the source.

### (Variation Example 5)

In FIG. 10, if the projection upon an incoming communication is set (the result of the judgment in the step S706 is YES), a condition for causing the projector module 6 to project an incoming notifying image may further be judged. For example, if it is judged that the projector-attached mobile phone 10 is unfolded to a folding angle θ = 80 degrees and the projector-attached mobile phone 10 is used alone, the flow of control proceeds to the steps S707 and S708 to cause the projector module 6 to project the incoming notification image and turn off the display of the liquid crystal display 4. In addition, if it is judged that the projector-attached mobile phone 10 is mounted on the cradle 20 in a folded state, the flow of control proceeds to the steps S707 and S708 to cause the projector module 6 to project the incoming notifying image and turn off the display of the liquid crystal display 4.

On the other hand, if it is judged that the folding angle θ of the projector-attached mobile phone 10 exceeds 80 degrees and the projector-attached mobile phone 10 is used alone, the flow of control proceeds to the step S709 to display an incoming notification on the liquid crystal display 4 without projecting the incoming notifying image by the projector module 6. On the other hand, if it is judged that the projector-attached mobile phone 10 is brought in a folded state (θ= 0 degrees) and the projector-attached mobile phone 10 is used alone, the incoming notifying image by the projector module 6 is not projected and the display by the liquid crystal display 4 is left to have been turned OFF. This allows the projector module 6 to be controlled so as not to perform projection in the case where the user is deemed to look at the liquid crystal display 4 (θ > 80 degrees) or where the projector-attached mobile phone 10 in a folded state is held in a bag.

### (Variation Example 6)

The equipment of the present invention may be configured such that in the case where the projector-attached mobile phone 10 in a folded state causes the projector module 6 to project an incoming notifying image (steps S707 and S708), if the folding angle becomes θ # 0 degrees, the projection of the incoming notifying image by the projector module 6 is terminated. This leads to automatic termination of projection if the user performs an open operation in a folded state in order to perform mail body text displaying operation, so that the projection beam will not accidentally enter the eyes of the user to make him or her feel too bright.

### (Variation Example 7)

Although in the above-mentioned embodiment, the equipment has been configured such that "menu screen" is displayed only on the liquid crystal display 4, it may also be configured such that the same screen may be projected by the projector module 6. In this case, the projector-attached mobile phone 10, if the operation key 12 is pressed, displays "menu screen" on the liquid crystal display 4 and also causes the projector module 6 to project the "menu screen". By projecting the "menu screen", the settings by the menu are shown to the viewers of the projection image. On the other hand, for the user who operates the operation member 110, they can operate the operation member 110 while he or she is watching the "menu screen" displayed on the liquid crystal display 4 near the operation member 110, which is more convenient than one operates the operationmember 110 while he or she is watching the "menu screen" projected at a position remote from the operation member 110. Further, by immediately reflecting the content varied by "projector adjustment menu" such as "luminance", "wall color", "trapezoid", and "focus" to the projection image, the user can operate while he or she is confirming the result of the adjustment.

The timing at which the same screen is displayed (projected) on the liquid crystal display 4 and the projector module 6 may be simultaneous for both the liquid crystal display 4 and the projector module 6 in response to the pressing of the operation key 12 as described above and also as follows. That is, the equipment is configured such that after "menu screen" is displayed only on the crystal display 4 in response to the pressing of the operation key 12, then the "menu screen" is projected by the projector module 6 in response to an item selection instruction (operation signal by the cursor key 16).

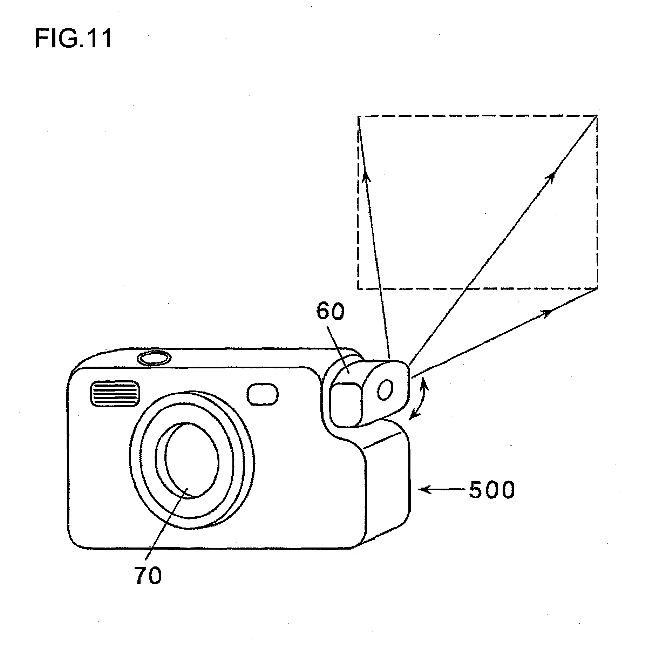

Although the projector-attached mobile phone 10 has been exemplified as the projector-attached electronic equipment, the present invention may be applied to a projector-attached camera, a projector-attached television set, a projector-attached radio and so on. In FIG. 11, there is shown an outline of a projector-attached camera 500 according to an embodiment of the present invention. As shown in FIG. 11, the projector-attached camera 500 includes a projector module 60 and a camera module 70. The projector module 60 projects projection data such as image data in the rearward of the projector-attached camera 500. Note that the configuration of the projector-attached camera 500 is not limited to one that is shown in FIG. 11. For example, the projector module 60 may be arranged so that projection image can be projected in the direction of the front or side of the projector-attached camera 500.

As detailed above, according to one embodiment of the present invention, projector-attached electronic equipment can be provided which appropriately judges/controls whether to perform projection. In addition, the projector-attached electronic equipment can be made more user-friendly upon projection. Further, when the present invention is applied to a projector-attached mobile phone or a projector-attached camera, the projection action can be associated with other functions to make it more user-friendly.

What is described above is absolutely exemplary and the present invention should not be limited to the relationships between the components in the above mentioned embodiment and the constituent elements of the present invention upon interpretation of the present invention.
The present application is based on Japanese Patent Application No. 2005-262217 (filed September 9, 2005), Japanese Patent Application No. 2005-262218 (filed September 9, 2005), and Japanese Patent Application No. 2005-262219 (filed September 9, 2005), and the contents of these are incorporated herein by reference.

## Claims

1. A projector-attached electronic equipment comprising:
a projection device that projects an optical image;
a judging device that judges whether to perform projection by the projection device according to a state of the electronic equipment; and
a projection control device that, (1) when it is judged by the judging device that projection is possible, controls the projection device to start projection in response to an instruction for projection from a projection instruction member while controls the projection device to terminate -projection in response to an instruction for terminating projection, and (2) when it is judged by the judging device that projection is impossible, if projection is being performed, controls the projection device to terminate the projection being performed while, if no projection is being performed, controls the projection device to prohibit start of the projection.

2. A projector-attached electronic equipment according to claim 1, further comprising:
a protection member that is configured to be opened and closed and to protect an exposed portion of the projection device in a closed state, wherein
the judging device, if the protection member is brought in an open state, judges that the projection is possible while if the protection member is brought in a closed state, judges that the projection is impossible.

3. A projector-attached electronic equipment according to claim 1, further comprising:
a timing device that measures a continuous projection time by the projection device, wherein
the judging device judges that the projection is possible before the continuous projection time measured by the timing device reaches a predetermined time while the judging device, when the continuous projection time measured by the timing means reaches the predetermined time, judges that the projection is impossible.

4. A projector-attached electronic equipment according to claim 1, further comprising:
a voltage detection device that detects a voltage of a battery that drives the electronic equipment, wherein
the judging device, when the voltage detection device detects a voltage equal to or higher than a predetermined value, judges that the projection is possible while, when the voltage detection device detects a voltage lower than the predetermined value, judges that the projection is impossible.

5. A projector-attached electronic equipment according to claim 1, further comprising:
a folding mechanism that folds the electronic equipment, wherein
the judging device judges whether or not the projection is possible depending on a folding angle of the folding mechanism.

6. A projector-attached electronic equipment comprising:
a projection device that projects an optical image;
a control device that controls projection by the projection device depending on a time elapsed from an instruction for projection from a projection instruction member.

7. A projector-attached electronic equipment according to claim 6, wherein:
the control device controls the projection device to perform the projection for a predetermined time from the instruction for projection.

8. A projector-attached electronic equipment according to claim 6, wherein:
the control device controls the projection device to start the projection with a delay of a predetermined time from the instruction for projection.

9. A projector-attached electronic equipment according to claim 7 or 8, wherein:
the control device controls the projection device to gradually increase projection luminance to a predetermined luminance in response to the instruction for projection.

10. A projector-attached electronic equipment comprising:
a projection device that projects an optical image;
a display device that displays information; and
a control device that, in response to an instruction for projection from a projection instruction member, controls the projection device to start projection and controls the display device to terminate display thereon, wherein
the control device, in response to an instruction for projection of a menu screen, controls the projection device to project the menu screen and controls the display device to display the menu screen thereon.

11. A projector-attached electronic equipment according to claim 10, wherein:
the menu screen includes at least one adjustment item for the projection device among luminance, color, trapezoid, and focus,
the projector-attached electronic equipment further comprising:
an operation member that is operated to select the adjustment item displayed on the menu screen, wherein:
the control device, in response to an operation signal from the operation member, instructs the projection device to perform adjustment on the selected adjustment item.

12. A projector-attached mobile phone comprising:
a projection device that projects an optical image;
a communication device that performs communication with an external device; and
a projection control device that controls the projection device to terminate the projection when a signal instructing start of communication is input to the communication device during projection by the projection device.

13. A projector-attached mobile phone according to claim 12, wherein:
the projection control device, when a signal instructing termination of communication is input to the communication device, controls the projection device to restart the projection.

14. A projector-attached mobile phone comprising:
a projection device that projects an optical image;
a communication device that performs communication with an external device; and
a projection control device that, when there is an incoming communication from the external device to the communication device, controls the projection device to start projection indicating an incoming notification.

15. A projector-attached mobile phone according to claim 14, wherein:
the projection control device controls the projection device to terminate the projection indicating the incoming notification after a predetermined time from a start of the projection.

16. A projector-attached mobile phone according to claim 14, wherein:
the projection control device, when the projection device is performing the projection, controls the projection device to project information indicating the incoming notification in superposition on a projection image.

17. A projector-attached mobile phone according to claim 14, wherein:
when the mobile phone is set in a silent mode, the projection control device controls the projection device to prohibit the projection indicating the incoming notification.

18. A projector-attached camera comprising:
a projection device that projects an optical image;
a photographing device that performs photographing;
an operation member that is operated to switch between projection by the projection device and photographing by the photographing device; and
a projection control device that, when a signal for instructing switching to photographing by the photographing device is input by the operation member during the projection by the projection device, controls the projection device to terminate the projection.
